# EUROPEAN PATENT SPECIFICATION

(11) **EP 1 816 396 B1**
(45) Date of publication and mention of the grant of the patent: **04.12.2013**
(21) Application number: 05710353.3
(22) Date of filing: 10.02.2005
(51) Int. Cl.: F23G 5/00, F23G 5/16, F23G 5/32, F23G 5/46, F23G 5/50, F23J 15/02, F23L 7/00

(54) **TREATMENT METHOD FOR COMBUSTIBLE GAS IN WASTE MELTING FURNACE**
BEHANDLUNGSVERFAHREN FÜR BRENNBARES GAS IN ABFALLSCHMELZOFEN
PROCEDE DE TRAITEMENT POUR GAZ COMBUSTIBLE DANS UN FOUR DE FUSION DE DECHETS

(30) Priority: 26.11.2004 JP 2004343005
(43) Date of publication of application: 08.08.2007
(73) Proprietor: Nippon Steel Engineering Co., Ltd, Tokyo 100-8071 (JP)
(72) Inventor: TAKAMIYA, Ken, c/o NIPPON STEEL ENGINEERING CO LTD, Kitakyushu-shi, Fukuoka 8048505 (JP); SHIBAIKE, Hideharu, c/o NIPPON STEEL ENGINEERING CO, LTD, Kitakyushu-shi, Fukuoka 8048505 (JP); OSADA, Morihiro, c/o NIPPON STEEL ENGINEERING CO, LTD, Kitakyushu-shi, Fukuoka 8048505 (JP)
(74) Representative: Vossius & Partner
(86) International application number: PCT/JP2005/002505
(87) International publication number: WO 2006/057075

(56) References cited:
- EP-A1- 0 999 412
- EP-A1- 1 284 389
- JP-A- 7 243 632
- JP-A- 8 121 728
- JP-A- 8 285 250
- JP-A- 11 221 545
- JP-A- 57 151 503
- JP-A- 2000 161 622
- JP-A- 2002 013 715
- JP-A- 2003 247 711
- JP-A- 2004 232 881
- JP-A- 2004 294 051

## Description

The present invention relates to a method of treatment of combustible gas including dust removed from a waste melting furnace.

In the disposal of general waste, industrial waste, and other waste, combustible gas including combustible dust and heat decomposing gases (CO, H₂, CH₄, CO₂, N₂, and the like) produced in a waste disposal furnace is burned in a combustion chamber and the heat recovered by a downstream heat exchanger (boiler). At that time, the concentration of dust in the combustible gas is controlled to a constant value or less to reduce corrosion of the boiler tubes and the like by salts inside the dust.

For example JP-A-2000-161622 (corresponding to EP-A-1284389) discloses a waste disposal method comprising causing incomplete combustion or partial combustion in a partial oxidation furnace accompanied with a combustion reaction of waste so as to produce combustible gas having a concentration converted to oxygen of -20% to 1% at the furnace outlet, introducing combustible gas having a concentration of dust of 5 to 20 g/Nm³ at 450°C to 650°C into a dust collecting apparatus to reduce the concentration of dust to 0.1 g/Nm³, and burning the combustible gas from which the dust has been removed in a combustion furnace at a high temperature. In this waste disposal method, supposedly the concentration of dust is reduced to 0.1 g/Nm³ or less whereby the amount of salts in the dust is reduced and the corrosion of the boiler tubes and the like positioned downstream of the combustion furnace becomes extremely small and, in addition, the dust removal enables the combustible gas to be burned at a high temperature, so the concentration of the aromatic-based organic compounds derived from the soot becomes low and, as a result, the concentration of incompletely burned products, that is, dioxin-like substances, can also be reduced.

Further, in the disposal of waste by melting as well, the combustible dust produced from the waste melting furnace is mainly made of combustible matter and ash. The combustible matter contains a large amount of fixed carbon and a small amount of volatile matter. In general, dust with a small amount of volatile matter is hard to ignite and, due to incomplete combustion, can become a cause of unburned CO and dioxins in the exhaust gas, so effort is made to reduce the concentration of dust in the combustible gas introduced to the combustion chamber as much as possible. By lowering the concentration of dust, the ash load in the combustion chamber decreases, deposits (clinker) in the combustion chamber become harder to form, and control of combustion at a higher temperature becomes possible. Further, the combustion load of the fixed carbon in the combustion chamber decreases. As a result the unburned CO of the exhaust gas decreases, the aromatics derived from the soot are also reduced, and the flue dioxins can clear the emission control value of flue dioxins of 0.01 ng-TEQ/Nm³.

However, in the conventional method of treatment of combustible gas, there was the problem that a dust collecting apparatus having a high dust collection efficiency became necessary for lowering the concentration of dust in the combustible gas as much as possible to satisfy the emission control value of the flue dioxins of 0.01 ng-TEQ/Nm³ or so and for suppressing trouble such as deposition and blockage of clinker at the heat exchanger and the like, so the equipment costs rose.

Therefore, the present invention provides a method of treatment of a combustible gas of a waste melting furnace which can remove dust from the combustible gas of the waste melting furnace in the optimum range so as to satisfy the controls on flue dioxins and prevent trouble such as deposition and blockage of the heat exchanger and the like without increasing the equipment costs.

A method of treatment of combustible gas of a waste melting furnace according to the present invention is guiding the combustible gas taken out from a waste melting furnace to a dust collecting apparatus to reduce the concentration of dust in the combustible gas to 0.02 to 0.07 kg/Nm³ in range, introducing the combustible gas after dust removal to a combustion chamber and blowing in air to burn it at a high temperature, so as to fix salt compound to the dust deposits (ash) and to dispose to the outside.

The present invention can satisfy the controls on flue dioxins and prevent trouble such as deposition and blockage of a heat exchanger and the like without removing dust with a high dust collection efficiency like in the past.

Further, an apparatus for treatment of combustible gas of a waste melting furnace used in the method of the present invention is having a dust collecting apparatus reducing the concentration of dust in the combustible gas taken out from the waste melting furnace to 0.02 to 0.07 kg/Nm³, a combustion chamber downstream of the dust collecting apparatus, introducing the combustible gas after dust removal, and blowing in air to make it burn, a heat exchanger exchanging heat with the combustion gas of the combustion chamber, and a dust feed apparatus feeding dust trapped by the dust collecting apparatus from a tuyere of a waste melting furnace to the inside of the waste melting furnace.

The invention is described in detail in conjunction with the drawings, in which:
FIG. 1 is a system diagram of a waste melting disposal apparatus used in the method of the present invention,
FIG. 2 is a graph showing the relationship of the concentration of dust in the combustible gas after dust removal and flue dioxins,
FIG. 3 is a graph showing the relationship of the concentration of dust in the combustible gas after dust removal and the concentration of chlorine in the dust at parts of the boiler,
FIG. 4 is a system diagram of control of combustion of the combustible gas according to the present invention,
FIG. 5 is a flowchart of control of combustion of the combustible gas according to the present invention.
FIG. 6 is a view of a specific example of the present control shown in FIG. 6,
FIG. 7 is a view showing an example of a waste melting disposal apparatus for using the method of the present invention,
FIG. 8(a) is a schematic cross-sectional view of a combustion chamber provided with boiler type furnace walls, while (b) is a cross-sectional view along A-A of (a), and
FIG. 9 shows the arrangement and structure of a burner, wherein (a) is a cross-sectional schematic view along B-B of FIG. 8(a), while (b) is a cross-sectional schematic view along C-C of (a) showing slits.

Embodiments applying the present invention to the disposal of waste by melting will be explained with reference to the drawings.

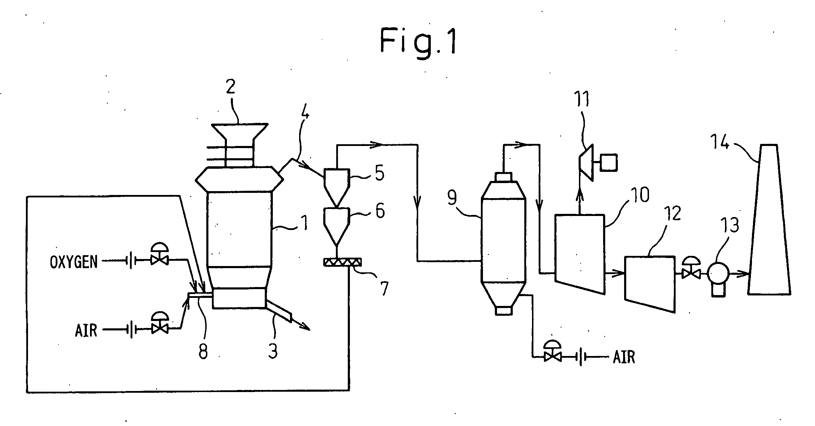

FIG. 1 is a system diagram of the waste melting disposal apparatus used for the present invention. A waste melting furnace 1 is charged with the waste together with the secondary materials of coke and limestone from the top of the furnace via a charging apparatus 2 of a double seal valve mechanism. This is dried, broken down by heat, burned, and melted, then discharged as melted material from a tap hole 3.

The combustible matter is discharged from a gas pipe 4 at the top of the waste melting furnace as a combustible gas including combustible dust and heat decomposing gases (CO,H₂,CH₄,CO₂,N₂, and the like). The dust in the combustible gas is trapped by a cyclone or other dust collecting apparatus 5 such as a cyclone. The dust collecting apparatus 5 removes dust so as to reduce the concentration of dust at the inlet side of the dust collecting apparatus 5 of 0.10 to 0.20 kg/Nm³ to a concentration of dust at the exit side of the dust collecting apparatus 5 of 0.02 to 0.07 kg/Nm³ in range. The concentration of dust of the inlet side is not limited to this range. An amount in excess of 0.2 kg/Nm³ can be handled by increasing the efficiency of the dust collecting apparatus etc.

The dust trapped by the dust collecting apparatus 5 is stored in a dust storage tank 6, fed out by a dust feedout apparatus 7, and blown into the furnace from a blast tuyere 8 supplying oxygen enriched air.

The combustible gas discharged from the dust collecting apparatus 5 is introduced to the combustion chamber 9 where it is burned. The heat is recovered by heat exchange at a heat exchanger (boiler) 10, while the steam produced in the boiler 10 is sent to a steam turbine power generation apparatus 11. The exhaust gas of the boiler 10 is separated into solids and gases by the dust collecting apparatus 12, then is discharged from an exhaust flue 14 by a blower 13. The heat exchanger need not be a boiler. Heat exchange is possible in the same way even with another air heat exchanger etc.

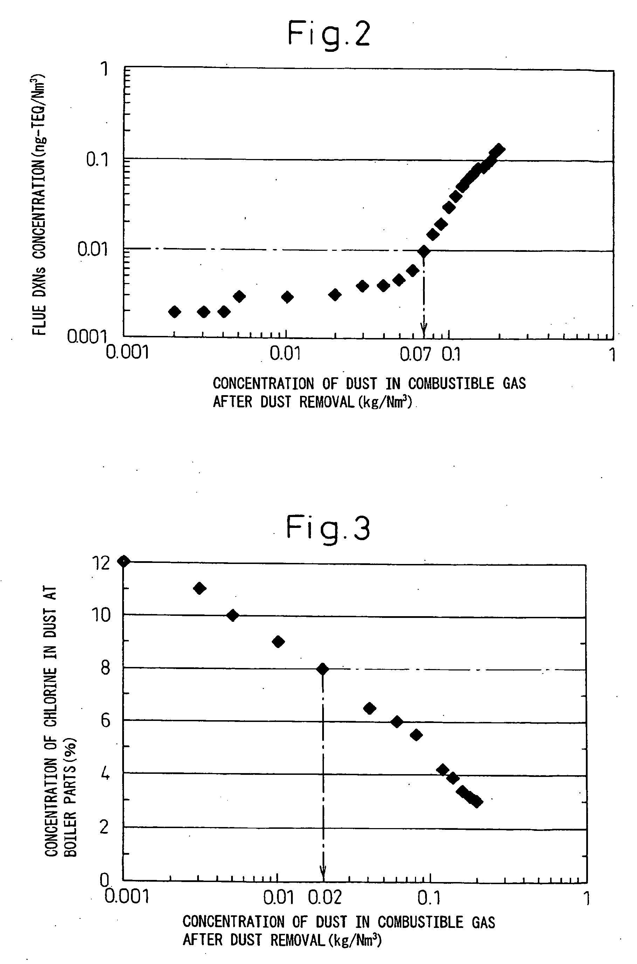

FIG. 2 is a graph showing the relationship of the concentration of dust in the combustible gas after dust removal and the flue dioxins. As shown in FIG. 2, if the concentration of dust in the combustible gas after dust removal introduced to the combustion chamber 9 is made 0.07 kg/Nm³ or less, the combustion load of fixed carbon in the combustion chamber 9 decreases, and control of combustion at a higher temperature (900°C to 1000°C) becomes possible. As a result, the unburned CO of the exhaust gas falls, the aromatics derived from the soot are also reduced, and the flue dioxins can be reduced to the emission control value of flue dioxins of 0.01 ng-TEQ/Nm³ or less.

However, with a concentration of dust lower than 0.02 kg/Nm³, there is little effect of reduction of the dioxins in the exhaust gas, so it is not necessary to remove dust to reduce the concentration of dust to 0.1 g/Nm³ or less as described in the previously stated Japanese Patent Publication (A) No. 2000-161622. On top of this, to reduce the concentration of dust to 0.1 g/Nm³ or less, a dust collecting apparatus having a high dust collection efficiency of at least 99.9% or more becomes necessary, so the equipment cost rises and leads to an increase in costs.

FIG. 3 is a graph showing the relationship of the concentration of dust in the combustible gas after dust removal and the chlorine concentration within the dust of a portion of the boiler. There is a correlation in dust concentration of the combustible gas which passes through the dust collecting apparatus 5 and the concentration of chlorine in the dust. In general, large particle size dust is easier to remove than fine particles, so if removing too much dust and making the concentration of dust in the combustible gas low, although the amount of dust passed through is decreased, the combustible dust introduced in the combustion chamber 9 increases in ratio of fine particles. Fine combustible dust has a high concentration of salts (Na, K, and Cl%), so the concentration of salt in the dust after combustion rises and deposition and blockage of clinker in the pipes of the later heat exchanger 10 and other trouble are caused. If only the fine particle combustible dust with the high concentration of chlorine is passed through the dust collecting apparatus 5 and burned in the combustion chamber and the concentration of chlorine in the dust in the boiler 10 exceeds 8%, deposition and blockage of clinker lowered in melting point by the salts in the pipes of a later heat exchanger such as the boiler 10 occur. As shown in FIG. 3, when the concentration of chlorine in the dust of the boiler 10 is 8%, the concentration of dust in the combustible gas is 0.02 kg/Nm³, so to prevent deposition and blockage of clinker, it is necessary to make the concentration of the dust in the combustible gas after dust removal 0.02 kg/Nm³ or more.

Due to the above, to suppress the flue dioxins to the emission control value of flue dioxins of 0.01 ng-TEQ/Nm³ or less and prevent deposition and blockage of clinker at the pipes, the optimum range of the concentration of dust in the combustible gas becomes 0.02 to 0.07 kg/Nm³.

The dust trapped by the dust collecting apparatus 5 has a high fixed carbon and ash content and a low volatile matter content, so is hard to ignite. Therefore, the dust is blown together with oxygen and air in the waste melting furnace via the tuyere 8. The dust blown inside the furnace is instantaneously burned and melted at the approximately 2000°C bottom of the furnace, so the dust can be converted to slag without increasing flue unburned CO and dioxins. As a result, the amount of production of ash from the dust removal is also reduced. Further, the fixed carbon in the dust blown in the furnace can be burned to generate heat and thereby be utilized as an auxiliary fuel and therefore the prime units of usage of coke can be reduced. For this reason, the effect becomes the highest in the case of a configuration of the waste melting furnace 1, dust collecting apparatus 5, combustion chamber 9, and heat exchanger 10 arranged in that order. If using a cyclone for the dust collecting apparatus, space can be saved and design of the inlet side flow rate, treatment quantity, and the like in accordance with the concentration of dust of the inlet of the dust collecting apparatus 5 becomes easy.

In the present invention, the gas is burned in the combustion chamber 9 at a gas temperature of a high temperature of 900°C to 1000°C. By holding the combustion chamber temperature at a high temperature and burning the combustible gas and combustible dust at a high temperature, the unburned matter can be easily completely burned. In the past, the gas was burned at 850°C to 900°C. If the temperature rises above this, the semi-molten state clinker will stick and obstruct stable combustion, so the temperature will not be able to be increased, but in the present invention, the coarse dust introduced into the combustion chamber 9 is removed by the dust collecting apparatus 5, so clinker will not easily stick to the furnace walls of the combustion chamber 9, temperature control of the combustion chamber becomes possible at a higher temperature than the past, and continuous operation becomes possible without problem even at 900°C to 1000°C in the present invention.

Further, in the present invention, the temperature of the combustible gas taken out from the waste melting furnace 1 is preferably made 300°C to 550°C. The combustible gas includes tar and salt compounds in addition to the CO, CO₂, H₂, CH₄, N₂, and other gases. At less than 300°C, the tar precipitates, while if over 550°C, CaCl₂, KCl, and other salt compounds become a semi-molten state and stick inside the gas pipe 4 exhausting combustible gas from the waste melting furnace 1. Consequently, outside this temperature range, the gas pipe 4 is blocked and combustible gas cannot be guided to the combustion chamber 9, so continuous combustion in the combustion chamber 9 becomes impossible. To hold the temperature of the combustible exhaust gas at 300°C or more, the charged height of the waste is adjusted or the amount burned inside the melting furnace is increased (amount of air at top tuyere is increased). Further, to hold the temperature at 550°C or less, water is sprayed inside the gas pipe 4. Due to this, the produced gas can be guided into the combustion chamber 9 and continuation of stable combustion can be achieved without the gas pipe 4 being blocked by tar or salt compounds.

Further, in the present invention, the flow rate of the combustible gas taken out from the waste melting furnace 1 in the gas pipe 4 is preferably 5 m/s to 10 m/s. The combustible gas produced from the waste melting furnace 1 contains dust, but if the flow rate in the gas pipe 4 is too fast, inertia causes dust with a large specific gravity to deposit and build up at the bent parts of the gas pipe. Further, the dust causes great wear. For this reason, the flow rate of the combustible gas must be made 10 m/s or less at the parts of the gas pipe where the concentration of dust is high at least before the dust collection apparatus. Further, if reducing the flow rate too much, the gas pipe 4 becomes larger in diameter which is uneconomical or the dust can no longer be carried and the dust may build up in the gas pipe 4, so 5 m/s or more is preferable. For example, if making the flow rate in the combustion chamber 9 5 m/s, continuation of stable combustion can be achieved without allowing dust to deposit and build up in the gas pipe 4.

In the method of treatment of combustible gas of a combustion chamber of a waste disposal apparatus the following combustion control method can be used.

By providing an irradiation thermometer using light to detect the temperature in a combustion chamber provided with an exhaust gas oxygen concentration control meter, air flow meter, and air flow control valve for detecting the oxygen concentration in the exhaust gas from the combustion chamber and adjusting the flow rate of the air blown into the combustion chamber, calculating the difference between the present value of the output of the temperature detection sensor of the irradiation thermometer and its moving average by a deviation calculator, finding an amount of correction air commensurate with this temperature deviation when the deviation is a prescribed value or more, and adding the amount of correction air to the amount of blown air, combustion is controlled to give a constant concentration of oxygen in the exhaust gas at the outlet side of the combustion chamber. At times of normal operation, the oxygen concentration setting is set higher than the stoichiometric amount of combustion air so that excess air is charged into the combustion chamber at all times. When the rate of change of the output of the temperature detection sensor exceeds the prescribed value, the air required for the initial combustion is provided by the amount of excess air of the secondary combustion air. The amount of air increased is made to catch up until this air becomes insufficient. To make up for the delay of correction by the exhaust gas oxygen concentration control meter, the increase in the amount of combustion air is held for a time commensurate with the delay time of the exhaust gas oxygen concentration control meter.

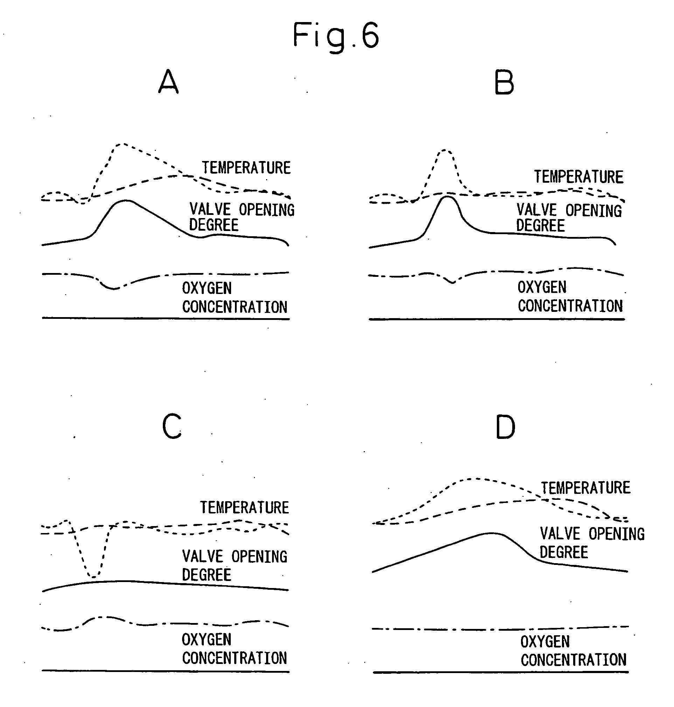

Further, the amount of change according to the temperature detection sensor may be continuously measured, the amount of change deemed the combustion load, and the increase in the amount of air blown in continuously changed to continuously correct the amount of air suitable for the magnitude of the inclination of the change and the length of the duration of the change. This enables control of the time integrated value of the amount of change of temperature and the integrated value of the amount of correction of the air blown in with correlation (below, referred to as "continuous corrective control"). The control is used when stressing the precision of the amount of correction. A specific example of the control is shown in FIG. 6. A of FIG. 6 shows the case when the corrective control suitably operates. B of FIG. 6 shows the case where the duration of the combustion load is shorter than envisioned, but a suitable amount of correction is obtained by shortening the duration by deviation from the moving average and suitable control can be continued without the amount of air becoming excessive and the combustion temperature dropping. C of FIG. 6 shows the case where the change is a temporary drop in the temperature instruction occurring due to factors other than a change in the combustion load and control can be continued in a suitable state without causing a drop in the combustion temperature by not applying the corrective control. D of FIG. 6 shows the state where the rate of change of the combustion load is small, but the deviation of the temperature from the average value becomes large and corrective control suitably operates, so a drop in the concentration of oxygen in the exhaust gas can be prevented.

The instantaneous value of the amount of change according to the temperature detection sensor can be used and the correction amount calculated from the amount of change used to open the valve opening degree of the air blow-in control valve for a constant time for correction, the amount of correction calculated by using the amount of temperature change as the amount of change of the combustion load, and the amount of correction determined on a one-to-one correspondence with the amounts of temperature change (below referred to as "step corrective control"). The control is used when stressing the ability to track the speed of the amount of corrections.

By using a high response, light-based temperature sensor, it is possible to judge a transitional state of the combustion and prevent an excess state of the amount of air correction due to mistaken detection without deeming a suitable rise in temperature in control by reset from a low load state and momentary temperature changes due to fluctuations in furnace pressure to be an increase in combustion load.

Normally, for the air blown into the combustion chamber, separate from the primary and secondary air mainly for the purpose of combustion, the stirring air for the purpose of improving the mixability of the combustion gas and char in the combustion chamber and the air is sometimes utilized, but in the above control method, the air increased may be the air used for stirring provided separate from the primary and secondary air. Further, by setting the flow rate of secondary air high and giving it a stirring effect, a high effect can be obtained.

The present control detects a temperature change in the furnace as light and controls the oxygen concentration and corrects the flow rate of the secondary air using the temperature change as a feed forward element of the flow rate of the secondary air, so the ability to track rapid combustion is good. Further, the amount of temperature change can be grasped as the amount of combustion load and the absolute amount of the amount of air correction can be determined with respect to the absolute amount of temperature change, so high precision combustion control becomes possible. Further, by continuously making the correction, it is possible to give a suitable amount of correction even with respect to the time-integrated value of the amount of change difficult to correct in the past.

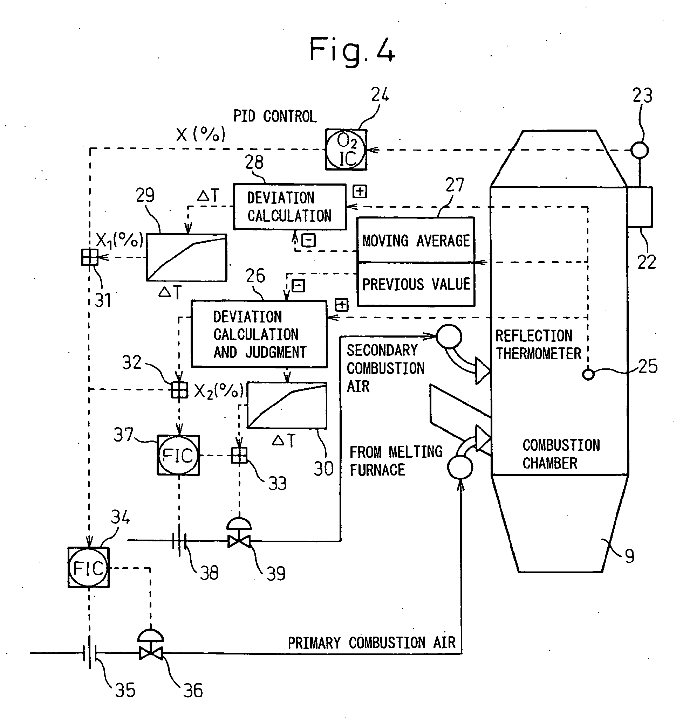

FIG. 4 is a system diagram of control of combustion of combustible gas according to the present embodiment. An exhaust gas oxygen sensor 23 for detecting the oxygen concentration in the exhaust gas is arranged at an exhaust gas outlet 22 of the combustion chamber 9. A detection signal of the oxygen concentration of the exhaust gas oxygen sensor 23 is sent to the exhaust gas oxygen concentration control meter 24. The combustion chamber 9 is provided with a temperature detection sensor 25 comprised of a photosensor measuring the conditions in the furnace. The signal of the temperature detection sensor 25 is sent to a rate calculator 26 and moving average calculator 27. A rate calculator 28 calculates the amount of change of the combustion load from the steady state from the output of the temperature detection sensor 25 and the output of the moving average calculator 27 and inputs it to a combustion load correction table 29. The combustion load correction table 29 calculates the necessary amount of air for the amount of change of the combustion load and outputs the corrected amount of air. The primary and secondary air flow rate control meters 34,37 receive as input the measured signals of the flow rates from the primary and secondary air flow meters 35,38 and input an air amount instruction from the exhaust gas oxygen concentration control meter 24 and an output value of the combustion load correction table 29 to an adder 31. The signal of the adder 31 is input to the primary and secondary air flow rate control meters 34, 37, whereby the primary and secondary air flow control valves 36, 39 are adjusted so that suitable amounts of air are blown into the furnace. By blowing the air of the amount of fluctuation of the combustion load in advance into the combustion air, it is possible to prevent fluctuation in the concentration of oxygen in the exhaust gas (continuous corrective control). The secondary air flow rate control meter 37 receives as input the measured signal of the flow rate from the secondary air flow meter 38. The signal of the rate calculator 6 is input into the combustion load correction table 30.

The combustion load correction table 30 calculates the amount of change of the combustion load detected as the temperature change based on the input rate of change of the temperature, outputs the necessary amount of air as the valve opening degree, and inputs it to the secondary air flow control valve 37. The signal of the secondary air flow rate control meter 37 is input together with the signal of the combustion load correction table 30 to the adder 33. The signal of the adder 33 is sent to the secondary air flow control valve 39 and regulates the opening degree of the secondary air flow control valve 39.

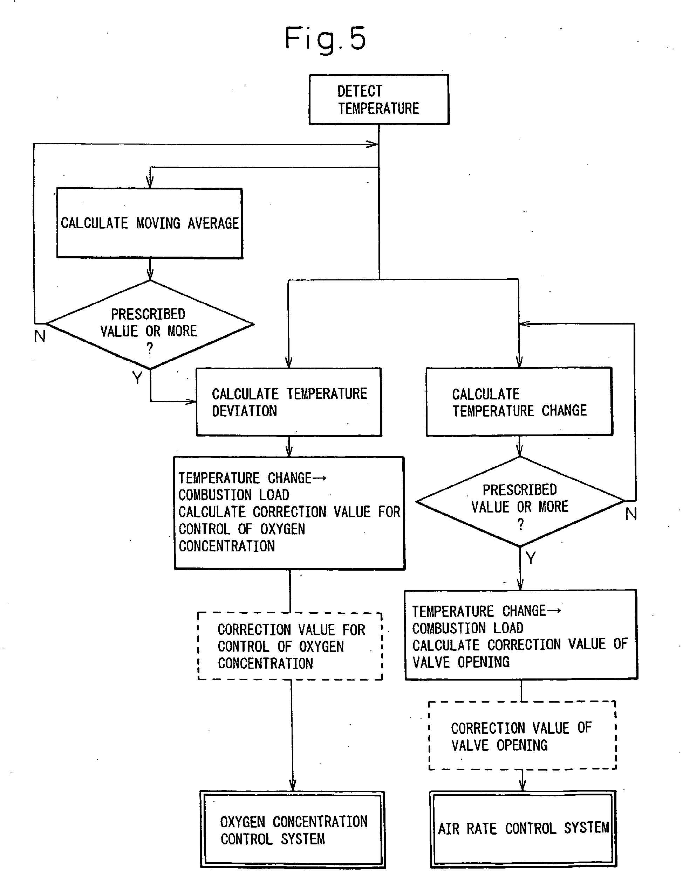

FIG. 5 is a flow diagram of the control of combustion of the combustible gas according to an example of the present invention. In continuous corrective control, the rate calculator 8 calculates the amount of change of the temperature from the output of the temperature detection sensor 25 and the moving average calculator 27 and outputs the result of calculation as a correction value ΔMV of the amount of air so as to cancel out the amount of change of the combustion load at the combustion load correction table 29. The correction value is added as a correction amount to the oxygen concentration control system. The correction amount ΔMV is output from the output value MV of the control system at the normal oxygen concentration as MV+ΔMV to the combustion air control system as the amount of air required. The oxygen concentration control system continues control continuously using the PV detected as the result of the amount of air controlled as MV+ΔMV.

On the other hand, in step corrective control, when the result of calculation at the rate calculator 26 from the output of the temperature detection sensor 25 is that the rate of change does not exceed the prescribed value, the secondary air flow control valve 39 is set to the ordinary opening degree MV so as to obtain the normal secondary air flow rate SV. The prescribed value of the rate of change of temperature is set to 10°C to 30°C. When the rate of change exceeds the prescribed value, it is judged that the char has suddenly been burned and the amount of combustion air is increased so that the secondary air flow control valve 39 changes from the normal opening degree MV to MV+ΔMV. When the temperature in the combustion chamber changes, the load in the combustion chamber is increasing, so the air required for the initial combustion is provided by the amount of excess air of the secondary combustion air. The amount of air increased in the above decision is made to catch up until this air becomes insufficient. To make up for the delay of correction by the exhaust gas oxygen concentration control meter, the increase in the amount of combustion air is held for a time commensurate with the delay time of the exhaust gas oxygen concentration control meter. After a constant time has elapsed, for example, after 20 seconds or so have elapsed, the secondary air flow rate catches up by the correction by the exhaust gas oxygen concentration control meter. When the moving average is smaller than the prescribed value, no correction is applied, the change is judged to be a normal rise in temperature such as in the process of reset from the low load state, and a drop in temperature due to excess air is prevented. The prescribed value is set to 800°C to 1000°C or so. Further, by detecting the difference from the moving average as the temperature change, the result of detection of a temperature change due to a momentary fluctuation of the furnace pressure is recognized as a change unrelated to the combustion load and no correction is made, so destabilization of control is prevented.

In this way, the combustion control detects a change in the furnace temperature as light and controls the oxygen concentration and corrects the secondary air flow rate using the temperature change as a feed forward element of the secondary air flow rate, so the ability to track rapid combustion is good. Further, the amount of temperature change can be grasped as the amount of combustion load and the absolute amount of the amount of air correction can be determined with respect to the absolute amount of temperature change, so high precision combustion control becomes possible. Further, by continuously making the correction, it is possible to give a suitable amount of correction even with respect to the time-integrated value of the amount of change difficult to correct in the past.

Further, by the present combustion control, temperature control of the combustion chamber at a higher temperature becomes possible, the combustion chamber temperature is held at a higher temperature than the past, and the combustible gas and combustible dust are burned at a high temperature, so the unburned matter can easily be completely burned and operation can be continued without problem even at 900°C to 1000°C. By the high temperature temperature-control of the combustion chamber, there is also the secondary effect that clinker becomes hard to stick to the furnace walls.

The air in the waste disposal apparatus can be used as the combustion air to be blown into the combustion chamber.

The burner of the combustion chamber is placed facing slightly downward. The furnace wall in front of the burner (position somewhat lower than the burner) becomes locally high in temperature and clinker may be produced. Therefore, at these parts, a support gas comprised of combustion exhaust gas of a low oxygen concentration (for example, the flue exhaust gas after IDF) is used for combustion so as to cause slow combustion and suppress any sudden rise in temperature and thereby prevent production of clinker. As the combustion air blown into the combustion chamber, for example, either the ejected gas produced at the tap hole of the waste melting furnace at the time of tapping or the air of the waste storage chamber storing the general waste or industrial waste or mixed air of the same may be used. If using the ejected gas or the air of the waste storage chamber storing municipal waste or industrial waste or mixed air of the same is used, there is the secondary effect that the work environment around the tap hole is improved and therefore the odor of the waste storage chamber can be dealt with.

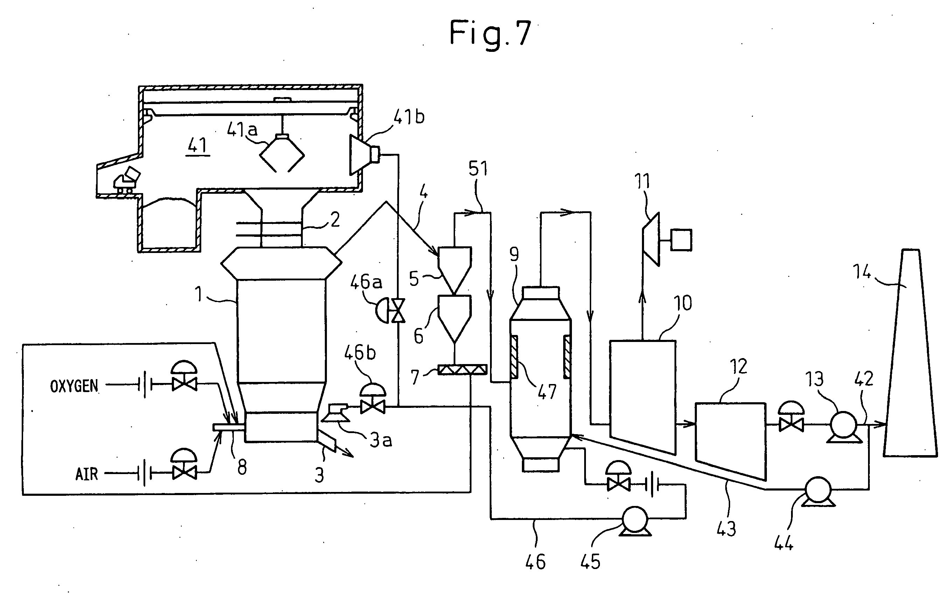

FIG. 7 shows an example of a waste melting apparatus used in the method of the present invention. The waste melting furnace 1 is charged with waste from the waste storage chamber 41 by a bucket 41a by the charging apparatus 2 of the double seal valve mechanism of the top of the furnace and is charged with secondary materials including the coke and the limestone by the charging apparatus 2. The waste is dried, broken down by heat, burned, and melted, then discharged from the tap hole 3 as a melted material. The combustible matter is discharged from the gas pipe 4 at the top of the waste melting furnace as heat decomposed gas, while the combustible dust is trapped by a cyclone or other dust collecting apparatus 5 and stored in the combustible dust storage tank 6, fed out by the combustible dust feedout apparatus 7, and blown from the blast tuyere 8 supplying oxygen-enriched air to the furnace. The exhaust gas from the dust collecting apparatus 5 is burned in the combustion chamber 9, its heat is recovered by the boiler 10, and the produced steam is sent to a steam turbine power generation apparatus 11. The exhaust gas of the boiler 10 is separated into solids and gases by the dust collecting apparatus 12, then is discharged from the exhaust flue 14 by the blower 13.

In FIG. 7, the flue 42 and the combustion chamber 9 are connected by a pipe 43 via a blower 44, so the flue exhaust gas can be sent as combustion air to the combustion chamber 9. By using combustion air comprised of low oxygen concentration flue exhaust gas (oxygen concentration of 8 to 12% or so and temperature of about 150°C), it is possible to cause slow combustion and suppress any sudden rise in temperature and thereby prevent the production of clinker. Further, it is possible to collect the air of the waste storage chamber 41 by a hood 41b and send it to the combustion chamber 9 through the blower 45 by a pipe 46 as combustion air. Further, it is possible to arrange a hood 3a to cover the tap hole 3, collect the ejected gas including the dust and smoke by the hood 3a, and send it to the combustion chamber 9 through the blower 45 by a pipe 46 as combustion air. The air and ejected gas of the waste storage chamber 41 can be switched or mixed by operating the valves 46a, 46b.

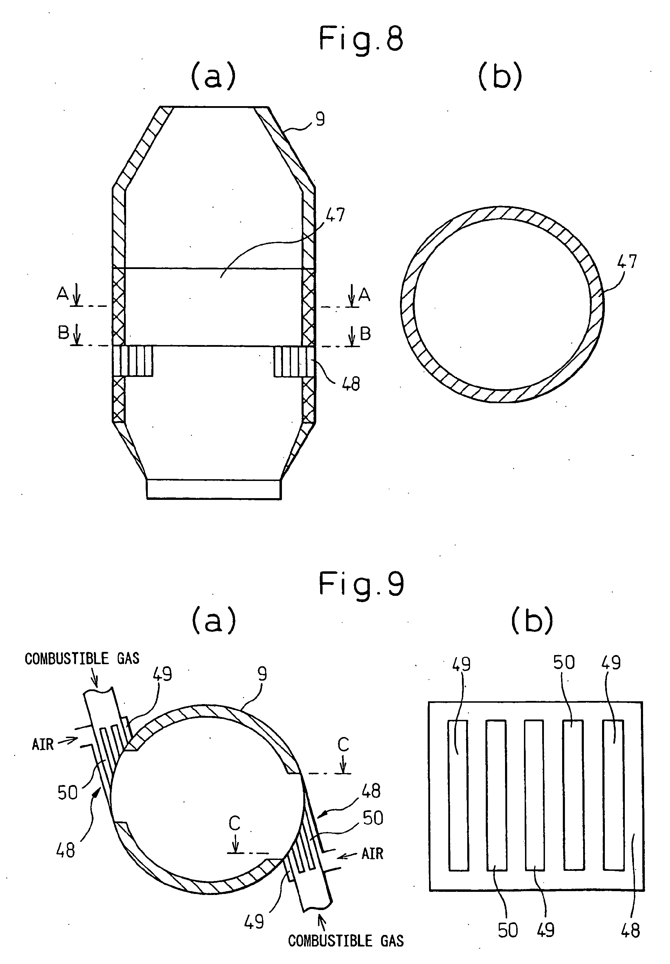

FIG. 8(a) is a schematic cross-sectional view of a combustion chamber provided with boiler type walls, while (b) is a cross-sectional view along the A-A of (a). Further, at least part of the furnace walls of the combustion chamber 9 can be made of boiler type furnace walls 47 comprised of low temperature metal walls or caster covering the metal walls. By configuring the combustion chamber 9 by the boiler type furnace walls 47, it is possible to prevent trouble such as melting of the clinker. That is, the surfaces of the boiler walls are low in temperature, so the melted ash is immediately cooled and peels off from the walls. The peeled off ash is discharged from the bottom of the combustion chamber 9. Further, by cooling the combustion exhaust gas, it is possible to burn it without blowing in excess air gas. As a result, the downstream boiler or dust collecting apparatus (bag filter and the like), induction blower, and the like can be made compact. In the present embodiment, the chamber is comprised of boiler type walls 47 1 meter above and below the burner 48, so melting of the ash can be reduced more.

FIG. 9 shows the arrangement and structure of the burner used in the method of the present invention, where (a) is a cross-sectional schematic view along B-B of FIG. 8(a) and (b) is the cross-sectional schematic view along C-C of (a) showing the slits. In FIG. 9, the combustible gas after dust removal is sent to the combustion chamber 9 via the duct 51. The front end of the duct 51 is connected to the combustible gas slits 50 of the burner 48 provided with the vertically long slits 49, 50. This burner 48 is connected to the combustion chamber 9. The combustible gas after dust removal is blown into the combustion chamber from the slits 50. In FIG. 8, the slits 49, 50 of the burner 48 are arranged so that the combustible gas swirls along the combustion chamber walls. Further, the slits 49, 50 of the burner 48 are comprised of the slits 49 blowing in combustion air and slits 50 blowing in combustible gas alternately arranged.

When using the burner 48 provided with the alternately arranged vertically long slits 49, 50 to introduce combustible gas into the combustion chamber 9 and blow in air, it is preferable to adjust the flow rates of the combustion air and combustible gas in the slits. To maintain good combustibility in the combustion chamber 9, the structure of the combustion burner for burning the combustible gas in the combustion chamber 9 becomes important. For this reason, by alternately arranging slits 49, 50 introducing air and combustible gas and making the flow rates of the air and combustible gas in the slits 10 m/s to 20 m/s and making the difference of the flow rates 5 m/s to 10 m/s to secure mixability of the air and combustible gas, the combustibility becomes good. For example, by using a burner with two combustible gas slits 50, three air slits 49, 10 m/s of combustible gas, 15 m/s of air, a 70 mm distance between the slits, a 100 mm width of the slits, and a 900 mm slit length, a good exhaust gas composition can be obtained.

The present invention reduces the concentration of dust in combustible gas to 0.02 to 0.07 kg/Nm³ in range to enable the combustible gas produced in a waste disposal furnace to be treated without incurring a high equipment cost and can satisfy the controls of flue dioxins (0.01 ng-TEQ/Nm³) and prevent trouble such as deposition and blockage of a heat exchanger.

Further, according to the present invention it is possible to control flue dioxins and prevent trouble such as deposition and blockage of a heat exchanger without using a dust collecting apparatus having a high dust collection efficiency.

## Claims

1. A method of treatment of combustible gas of a waste melting furnace (1), wherein the combustible gas taken out from a waste melting furnace (1) is guided to a dust collecting apparatus (5), the concentration of dust in the combustible gas is reduced to 0.02 kg/Nm³ or more for preventing deposition and blockage of clinker at the pipes and 0.07 kg/Nm³ or less for suppressing the flue dioxins to the emission control value of flue dioxins of 0.01 ng-TEQ/Nm³ or less, and the combustible gas after the dust removal is introduced to a combustion chamber (9) and burned at a high temperature of 900°C to 1000°C by blowing air.

2. A method of treatment of combustible gas in a waste melting furnace (1) according to claim 1, wherein the air blown into the combustion chamber (9) is a flue exhaust gas.

3. A method of treatment of combustible gas of a waste melting furnace according to claim 1 or 2, wherein the air blown into the combustion chamber (9) is any of ejected gas produced at a tap hole of the waste melting furnace (1) at the time of tapping or the air of a waste storage chamber storing municipal waste or industrial waste or mixed air of the same.

4. A method of treatment of combustible gas of a waste melting furnace (1) according to any one of claims 1 to 3, wherein the temperature of the combustible gas taken out from the waste melting furnace (1) is 300°C to 550°C.

5. A method of treatment of combustible gas of a waste melting furnace (1) according to any one of claims 1 to 4, wherein the flow rate of the combustible gas taken out from the waste melting furnace (1) is 5 m/s to 10 m/s.

6. A method of treatment of combustible gas in a waste melting furnace (1) according to any one of claims 1 to 5, wherein a main burner (48) with alternately arranged vertical long slits (49, 50) is used to blow air along with the combustible gas into the combustion chamber (9), the flow rates of air and combustible gas inside the slits are made to 10 m/s to 20 m/s and the difference of flow rates is made to 5 m/s to 10 m/s.

7. A method of treatment of combustible gas of a waste melting furnace according to any one of claims 1 to 6, wherein dust trapped by a dust collecting apparatus (5) from combustible gas taken out from the waste melting furnace (1) is supplied from the tuyere (8) of the waste melting furnace (1) and is burned at a high temperature to melt it.

8. A method of treatment of combustion gas in a combustion chamber of a waste disposal apparatus according to any one of claims 1 to 7, wherein an irradiation thermometer (25) using light to detect the temperature is provided in a combustion chamber (9) provided with an exhaust gas oxygen concentration control meter (24) air flow meter (38), and air flow control valve (36) for detecting the oxygen concentration in the exhaust gas from the combustion chamber (9) and adjusting the flow rate of the air blown into the combustion chamber (9), the difference between the present value of the output of the temperature detection sensor of the irradiation thermometer (25) and its moving average is calculated by a deviation calculator, an amount of correction air commensurate with this temperature deviation is found when said deviation is a prescribed value or more, and the amount of correction air is added to said amount of blown air, whereby combustion is controlled to give a constant concentration of oxygen in the exhaust gas at the outlet side of the combustion chamber (9).

## Patentansprüche

1. Verfahren zur Behandlung von brennbarem Gas eines Abfallschmelzofens (1), wobei das aus einem Abfallschmelzofen (1) herausgeführte brennbare Gas einer Staubsammelvorrichtung (5) zugeführt wird, die Staubkonzentration im brennbaren Gas auf mindestens 0,02 kg/Nm³ zum Verhindern von Schlackenabscheidung und -verstopfung an den Rohren und höchstens 0,07 kg/Nm³ zum Unterdrücken der Abzugskanaldioxine auf den Emissionsgrenzwert für Abzugskanaldioxine von höchstens 0,01 ng-TEQ/Nm³ reduziert wird und das brennbare Gas nach Staubentfernung in eine Brennkammer (9) eingeleitet und bei hoher Temperatur von 900 °C bis 1000 °C durch Einblasen von Luft verbrannt wird.

2. Verfahren zur Behandlung von brennbarem Gas in einem Abfallschmelzofen (1) nach Anspruch 1, wobei die in die Brennkammer (9) eingeblasene Luft ein Rauchgas ist.

3. Verfahren zur Behandlung von brennbarem Gas eines Abfallschmelzofens nach Anspruch 1 oder 2, wobei die in die Brennkammer (9) eingeblasene Luft ausgestoßenes Gas, das an einem Stichloch des Abfallschmelzofens (1) beim Abstechen erzeugt wird, oder die Luft einer Abfalllagerkammer, in der kommunaler Abfall oder industrieller Abfall gelagert wird, oder Mischluft daraus ist.

4. Verfahren zur Behandlung von brennbarem Gas eines Abfallschmelzofens (1) nach einem der Ansprüche 1 bis 3, wobei die Temperatur des aus dem Abfallschmelzofen (1) herausgeführten brennbaren Gases 300 °C bis 550 °C beträgt.

5. Verfahren zur Behandlung von brennbarem Gas eines Abfallschmelzofens (1) nach einem der Ansprüche 1 bis 4, wobei die Durchflussgeschwindigkeit des aus dem Abfallschmelzofen (1) herausgeführten brennbaren Gases 5 m/s bis 10 m/s beträgt.

6. Verfahren zur Behandlung von brennbarem Gas in einem Abfallschmelzofen (1) nach einem der Ansprüche 1 bis 5, wobei ein Hauptbrenner (48) mit abwechselnd angeordneten senkrechten Langschlitzen (49, 50) verwendet wird, um Luft zusammen mit dem brennbaren Gas in die Brennkammer (9) einzublasen, die Durchflussgeschwindigkeiten von Luft und brennbarem Gas innerhalb der Schlitze auf 10 m/s bis 20 m/s eingestellt werden und die Differenz der Durchflussgeschwindigkeiten auf 5 m/s bis 10 m/s eingestellt wird.

7. Verfahren zur Behandlung von brennbarem Gas eines Abfallschmelzofens nach einem der Ansprüche 1 bis 6, wobei Staub, der durch eine Staubsammelvorrichtung (5) aus brennbarem Gas abgefangen wird, das aus dem Abfallschmelzofen (1) herausgeführt wird, aus der Düse (8) des Abfallschmelzofens (1) zugeführt und bei hoher Temperatur verbrannt wird, um ihn zu schmelzen.

8. Verfahren zur Behandlung von Brenngas in einer Brennkammer einer Abfallentsorgungsvorrichtung nach einem der Ansprüche 1 bis 7, wobei ein Strahlungsthermometer (25), das Licht verwendet, um die Temperatur zu detektieren, in einer Brennkammer (9) vorgesehen ist, die mit einem Messwerkregler (24) für die Sauerstoffkonzentration im Abgas, einem Luftdurchflussmesser (38) und einem Luftdurchfluss-Regelventil (36) zum Detektieren der Sauerstoffkonzentration im Abgas aus der Brennkammer (9) und Einstellen der Durchflussgeschwindigkeit der in die Brennkammer (9) eingeblasenen Luft versehen ist, die Differenz zwischen dem Ist-Wert der Ausgabe des Temperaturdetektionssensors des Strahlungsthermometers (25) und dessen gleitendem Mittelwert durch einen Abweichungsrechner berechnet wird, eine Korrekturluftmenge entsprechend dieser Temperaturabweichung ermittelt wird, wenn die Abweichung mindestens einen vorgeschriebenen Wert hat, und die Korrekturluftmenge der eingeblasenen Luftmenge zugefügt wird, wodurch die Verbrennung so geregelt wird, dass sie eine konstante Sauerstoffkonzentration im Abgas auf der Auslassseite der Brennkammer (9) ergibt.

## Revendications

1. Procédé de traitement d'un gaz combustible d'un four de fusion de déchets (1), dans lequel le gaz combustible prélevé à partir d'un four de fusion de déchets (1) est guidé vers un dispositif de collecte de poussière (5), la concentration en poussière dans le gaz combustible est réduite à 0,02 kg/Nm³ ou plus pour empêcher le dépôt et le blocage du mâchefer au niveau des tuyaux et à 0,07 kg/Nm³ ou moins pour supprimer les dioxines de combustion à la valeur de contrôle d'émission des dioxines de combustion de 0,01 ng-TEQ/Nm³ ou moins, et le gaz combustible après l'élimination de poussière est introduit dans une chambre de combustion (9) et brûlé à une température élevée de 900 °C à 1000 °C pour soufflage d'air.

2. Procédé de traitement d'un gaz combustible d'un four de fusion de déchets (1) selon la revendication 1, dans lequel l'air soufflé dans la chambre de combustion (9) est un gaz d'échappement de combustion.

3. Procédé de traitement d'un gaz combustible d'un four de fusion de déchets selon la revendication 1 ou 2, dans lequel l'air soufflé dans la chambre de combustion (9) est n'importe lequel d'un gaz éjecté produit au niveau d'un trou de coulée du four de fusion de déchets (1) au moment de la coulée ou de l'air d'une chambre de stockage de déchets stockant des déchets municipaux ou des déchets industriels ou un air mixte de ceux-ci.

4. Procédé de traitement d'un gaz combustible d'un four de fusion de déchets (1) selon l'une quelconque des revendications 1 à 3, dans lequel la température du gaz combustible prélevé à partir d'un four de fusion de déchets (1) est de 300 °C à 550 °C.

5. Procédé de traitement d'un gaz combustible d'un four de fusion de déchets (1) selon l'une quelconque des revendications 1 à 4, dans lequel le débit du gaz combustible prélevé à partir du four de fusion de déchets (1) est de 5 m/s à 10 m/s.

6. Procédé de traitement d'un gaz combustible d'un four de fusion de déchets (1) selon l'une quelconque des revendications 1 à 5, dans lequel un brûleur principal (48) avec disposées en alternance des fentes verticales longues (49, 50) est utilisé pour souffler de l'air avec le gaz combustible dans la chambre de combustion (9), les débits d'air et de gaz combustible à l'intérieur des fentes étant de 10 m/s à 20 m/s et la différence de débits étant de 5 m/s à 10 m/s.

7. Procédé de traitement d'un gaz combustible d'un four de fusion de déchets selon l'une quelconque des revendications 1 à 6, dans lequel la poussière piégée par un dispositif de collecte de poussière (5) du gaz combustible prélevé à partir du four de fusion de déchets (1) est alimentée par la tuyère (8) du four de fusion de déchets (1) et est brûlée à une température élevée pour la faire fondre.

8. Procédé de traitement d'un gaz de combustion dans une chambre de combustion d'un dispositif d'élimination de déchets selon l'une quelconque des revendications 1 à 7, dans lequel un thermomètre de rayonnement (25) utilisant la lumière pour détecter la température est fourni dans une chambre de combustion (9) dotée d'un dispositif de mesure de la concentration d'oxygène d'un gaz d'échappement (24), d'un dispositif de mesure du débit d'air (38) et d'une vanne de commande du débit d'air (36) pour détecter la concentration en oxygène dans le gaz d'échappement de la chambre de combustion (9), et ajuster le débit d'air soufflé dans la chambre de combustion (9), la différence entre la valeur actuelle de la sortie du capteur de détection de température du thermomètre de rayonnement (25) et sa moyenne de déplacement est calculée par un calculateur de déviation, on détermine une quantité d'air de correction proportionnelle à cette déviation de température lorsque ladite déviation est une valeur recommandée ou plus, et la quantité d'air de correction est ajoutée à ladite quantité d'air soufflé, de sorte que la combustion est régulée pour obtenir une concentration constante en oxygène dans le gaz d'échappement au niveau du côté de sortie de là chambre de combustion (9).
